# EUROPÄISCHE PATENTSCHRIFT

(11) **EP 0 705 061 B1**
(45) Veröffentlichungstag und Bekanntmachung des Hinweises auf die Patenterteilung: **19.03.1997**
(21) Anmeldenummer: 94920960.5
(22) Anmeldetag: 20.06.1994
(51) Int. Cl.: A21D 15/02, A21C 15/00, A23G 7/02

(54) **VERFAHREN ZUM ABKÜHLEN UND NACHFOLGENDEN KONFEKTIONIEREN VON LEBENSMITTELN**
METHOD OF COOLING AND SUBSEQUENTLY PACKAGING FOODSTUFFS
PROCEDE PERMETTANT DE REFROIDIR, PUIS D'EMBALLER DES ALIMENTS

(30) Priorität: 21.06.1993 DE 4320482
(43) Veröffentlichungstag der Anmeldung: 10.04.1996
(73) Patentinhaber: STULZ GmbH, D-22457 Hamburg (DE)
(72) Erfinder: JACOBS, Peter, D-25488 Holm (DE); DE WOLFF, Jörg, D-25469 Halstenbek (DE)
(74) Vertreter: Siewers, Gescha, Dr.
(86) Internationale Anmeldenummer: EP9402006
(87) Internationale Veröffentlichungsnummer: WO9500028

(56) Entgegenhaltungen:
- FR-A- 2 116 805
- GB-A- 1 580 442
- GB-A- 2 156 501
- GB-A- 2 177 586
- US-A- 2 643 523

## Beschreibung

Die Erfindung betrifft ein Verfahren zum Abkühlen und nachfolgenden Konfektionieren von Lebensmitteln.

Es gibt eine Vielzahl von Lebensmitteln, die im Verlauf Ihrer Herstellung einem Erhitzungsverfahren unterzogen werden und die dann vor ihrer Konfektionierung abgekühlt werden müssen. Nur beispielhaft wird auf die Herstellung von fertig verpacktem Schnittbrot, von verpackten Brühwurstsorten oder Milchprodukten wie Joghurt oder ähnlichem verwiesen. Bei der industriellen Fertigung müssen derartige Produkte nach dem Erhitzungsprozeß möglichst schnell abgekühlt und unter hygienisch einwandfreien Bedingungen verpackt bzw. konfektioniert werden. Da für den Abkühlungsprozeß aus technischen und auch mikrobiologischen Gründen nur ein begrenzter Zeitraum zur Verfügung steht, muß die Kühlung häufig durch starkes Absenken der Temperaturen unter Verwendung von Kältemaschinen erfolgen, was wiederum zu eine relativ hohen Energiebedarf führt. Im folgenden wird die Situation exemplarisch anhand eines Verfahrens zur Herstellung von Schnittbrot dargestellt, wobei es aber für den Fachmann selbstverständlich ist, das entsprechende Verfahren auch bei der Abkühlung und Konfektionierung von anderen Lebensmitteln in gleicher Weise eingesetzt werden können.

Aufgrund der Zunahme von Klein- oder Einzelhaushalten wird sowohl Roggen- wie auch Weizenmischbrot zunehmend als Schnittbrot gekauft, also in Mengen, die kleineren Haushalten besser angepaßt sind als ganze Brote. Schnittbrot wird heute in der Regel aus Stangenbrot hergestellt, die etwa 7,5 - 8,0 kg bei der Herstellung wiegen und eine Stangenlänge von etwa 1,5 m oder mehr bei unterschiedlicher Stangenbreite aufweisen. Diese Brote müssen nach dem Backen abgekühlt, geschnitten und konfektioniert werden, wobei zu berücksichtigen ist, daß Industriebacköfen eine Produktionsleistung von etwa 1800 kg Brot/Std. und Schneidemaschinen eine solche von etwa 900 kg/Std. aufweisen. Das den Ofen verlassende Brot wird in der Regel in Kühlräumen von der Backtemperatur bis zur Schneidetemperatur, also einer Brotkerntemperatur von unter 38°C abgekühlt. Die Abkühlung muß relativ schnell erfolgen, damit der Ausstoß der Backöfen abgekommen und weiterverarbeitet werden kann. In der Regel werden die Brote auf sogenannten Brotwagen transportiert, die jeweils die Lagerung mehrerer Brotstangen auf verschiedenen Ebenen des Wagens ermöglichen. Heute verwendete Brotwagen transportieren etwa 300 - 400 kg Brot beispielsweise auf 8 Ebenen.

Die bisherigen Verfahren zum Kühlen des Brotes vor der Weiterverarbeitung weisen eine Reihe von Nachteilen auf, weil derartige Kühlräume vor allem bei sommerlichen Temperaturen eine zusätzliche separate Kälteerzeugung benötigen, also energieintensiv und damit kostenintensiv sind. Hinzu kommt, daß bei den bisher üblichen Verfahren durch die Erwärmung der Kühlluft auch eine Reduzierung der Feuchtigkeit erfolgt, also eine Austrocknung des frischen Brotes stattfindet, die aus verschiedenen Gründen unerwünscht ist. Häufig ist auch eine gleichmäßige Abkühlung nicht gewährleistet, was zu Schwierigkeiten bei der Weiterverarbeitung führen kann, wenn die Brotkerntemperatur noch zu hoch liegt. Und schließlich gibt es eine ganze Reihe von Problemen auf hygienischem Gebiet, da Brot als Stärke- und Zuckerhaltiges Substrat einen idealen Nährboden für verschiedene Bakterien und Pilze darstellt und daher die Verarbeitung von frischgebackenem Brot unter Reinraumbedingungen stattfinden muß, die bei den bisher üblichen Kühl- und Schneideverfahren nur unter großem Aufwand einzuhalten sind.

Der Erfindung liegt daher die Aufgabe zugrunde, Verfahren zur Abkühlung und Konfektionierung zu entwickeln, die die geschilderten Nachteile nicht aufweisen.

Zur Lösung der Aufgabe wird ein Verfahren zum Abkühlen und anschließenden Konfektionieren von Lebensmitteln vorgeschlagen, das dadurch gekennzeichnet ist, daß das mindestens 100°C aufweisende Lebensmittel in einem Kühlraum auf Temperaturen zwischen etwa 98 bis 90°C durch freie Konvektion und dann in einem in Abschnitte unterteilten Kühltunnel adiabatisch auf Schnitt- oder Fülltemperatur des Lebensmittels abgekühlt und befeuchtet und dann in an sich bekannter Weise portioniert, verpackt und konfektioniert wird. In einer bevorzugten Ausführungsform wird ein Verfahren zum Herstellen von Schnittbrot vorgeschlagen, das dadurch gekennzeichnet ist, daß das in Stangen gebackene Brot am Ofenauslauf in einem Kühlraum durch freie Konvektion auf 95°C und dann in einem in Abschnitte unterteilten Kühltunnel adiabatisch weiter auf 35°C abgekühlt und befeuchtet und dann in an sich bekannter Weise geschnitten, verpackt und konfektioniert wird.

Überraschend hat sich herausgestellt, daß die bekannten Schwierigkeiten bei den bisherigen Verfahren zum Kühlen und Schneiden von Brot weitgehend vermieden werden können, wenn das in üblicher Weise hergestellte und gebackene Brot in Form von Brotstangen nach der Entnahme aus dem Ofen in einem den Reinraumbedingungen entsprechenden Kühlraum auf den Transportwagen durch Konvektion auf 95°C vorgekühlt und dann in einem Kühltunnel mit 3 Kühlstufen oder -abschnitten adiabatisch weiter auf Schnittemperatur heruntergekühlt und befeuchtet wird, so daß die weitere Verarbeitung dann in an sich bekannter Weise erfolgen kann. Vorzugsweise werden bei diesem Verfahren als Transportmittel Brotwagen eingesetzt, die auf verschiedenen Ebenen etwa 40 Brote entsprechend 320 kg fassen.

Der Kühlraum selbst wird mit Zuluft mit einer Temperatur von 23°C/90% r.F. beschickt, wobei sich durch die Wärmeabstrahlung die Konvektion des frischgebackenen Brotes die Temperatur bei Betrieb auf 28°C/65% r.F. erhöht. In den Kühlraum ist ein Kühltunnel integriert, dessen Querschnitt auf die Brotwagen abgestimmt ist, und zwar so, daß die Backwaren mit der Längsseite quer durch den Kühltunnel transportiert werden. Der wärmegedämmte Kühltunnel ist in 3 Stufen I, II und III unterteilt, die jeweils über eigene Lüftungsgeräte verfügen. Die Zuluft wird von den Lüftungsgeräten über ein Kanalsystem über eine Druckkammer eingeblasen, die längsseitig der Tunnelwände aufgebaut ist. Der Durchtritt der Zuluft zu den Brotwagen erfolgt über längsseitig angeordnete waagerechte Luftdurchlässe, vorzugsweise Schlitze im Tunnel, die jeweils entsprechend der Höhe der Borde für die Backwaren angeordnet sind, so daß die Zuluft gezielt über die Länge der Brotstangen geführt wird. Die Austrittsgeschwindigkeit der Zuluft aus den Schlitzen wird so gewählt, daß eine Durchtrittsgeschwindigkeit über dem Brot von 0,3 m/s erzielt wird. Die Zuluftzuführung erfolgt wechselseitig in den Kühlstufen von links oder rechts, so daß eine möglichst gleichmäßige Abkühlung über die gesamte Brotlänge erzielt werden kann.

Das eigentliche Kühlverfahren im Kühltunnel erfolgt im Umluftkühlverfahren und zwar so, daß die Abluft aus der jeweils nachfolgenden Kühlstufe als Zuluft in der vorhergehenden Kühlstufe eingesetzt wird, wobei als Zuluft in der kühlsten Stufe III die Luft aus dem Kühlraum eingesetzt wird. In jeder Stufe wird die Zuluft zur Zuführung in den Tunnel adiabatisch mit Ultraschallbefeuchtern abgekühlt und auf eine relative Luftfeuchtigkeit von 90% eingestellt. Ultraschallklimageräte zur Abkühlung und Befeuchtung von Luft sind an sich bekannt und werden unter anderem von der Fa. Stulz GmbH, Hamburg, in den Handel gebracht.

In der Stufe I des Kühltunnels wird das Brot mit der Abluft aus der Stufe II mit einer Temperatur von beispielsweise 37°C/47% r.F. angesaugt und adiabatisch auf 29°C/90% r.F. abgekühlt.

Das Brot wird in dieser Stufe von 95°C auf 60°C gekühlt, während sich die Luft auf 55°C/22% r.F. erwärmt, was einer Kühlleistung von 44 kW entspricht. In der Stufe II wird die Abluft aus der Stufe III mit 31°C/60% r.F. adiabatisch auf 26°C/90% r.f. gekühlt, was zu einer Brotkühlung auf 45°C und einer Lufterwärmung auf 37°C/47% r.F. führt entsprechend einer Kühlleistung von 19 kW. In der Stufe III wird die Abluft aus dem Kühlraum mit einer Temperatur von 28°C/65% r.F. adiabatisch auf 24°C/90% r.F. gekühlt, wobei die Brottemperatur von 45°C auf 35°C absinkt und die Luft sich auf 31°C/60% r.F. erwärmt, was einer Kühlleistung von 12 kW entspricht.

Alternativ kann die Kühlung im Kühltunnel auch dadurch erfolgen, daß Reinstwasser in feinste Wassertröpfchen mit einem Durchmesser unter 30µm zerstäubt wird. Die besten Ergebnisse stellen sich dabei ein, wenn der Durchmesser der Wassertröpfchen zwischen 5 und 20µm liegt.

Bei diesen Verfahren werden Reinstwasser und auf niedrige Druckwerte eingestellte Luft durch Düsen geleitet, die das Wasser in feinste Wassertröpfchen des oben angegebenen Durchmessers zerstäuben. Das so fein zerstäubte Wasser kann dann sehr schnell in der Luft verdunsten.

Der entscheidende Vorteil des Verfahrens ist, daß der Luft durch das Verdunsten des Wassers Wärme entzogen wird und dadurch die Temperatur der befeuchteten Luft sinkt. Aufgrund der Größe der Wassertröpfchen geschieht dies schnell und kostensparend. Für jeden Liter zerstäubtes Wasser werden der Luft ca. 540 kcal Wärme entzogen.

Das Brot wird dann vom Kühlraum in den Schneideraum transportiert und von der Schneide- und Verpackungsstraße übernommen und in an sich bekannter Weise geschnitten, verpackt und konfektioniert. Vorzugsweise herrschen sowohl im Kühlraum, im Kühltunnel und im Schneideraum Reinraumbedingungen, die in an sich bekannter Weise beispielsweise im Schneideraum durch Installation einer Laminarflow-Einheit erzielt werden können. Im Schneideraum wird vorzugsweise eine Temperatur von 22 ± 2°C bei einer relativen Luftfeuchtigkeit von 50 ± 10% eingehalten.

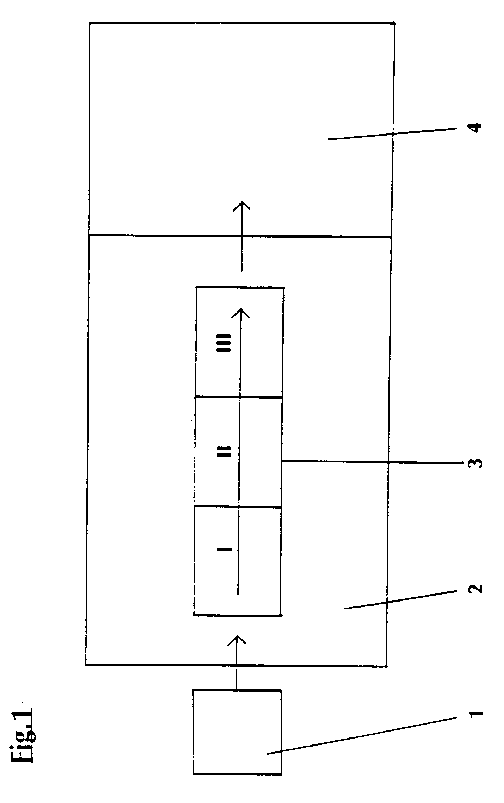

In der Fig. 1 ist der Verfahrensablauf noch einmal schematisch dargestellt. Das in Stangen gebackene Brot wird dem Ofen 1 entnommen und auf Brotwagen in den Kühlraum 2 transportiert, in dem durch freie Konvektion eine Abkühlung auf 95°C erfolgt. Die Brotwagen werden dann in den Kühltunnel 3 mit seinen 3 Stufen I, II und III überführt, in denen eine adiabatische Abkühlung im Umluftverfahren unter Verwendung von Ultraschallbefeuchtern oder Wasserzerstäubung erfolgt, bis die Brottemperatur 35°C erreicht hat. Das Brot wird sodann von den Transportwagen auf die Schneide- und Konfektionierstraße im Schneideraum 4 gebracht und dort weiterverarbeitet.

Das erfindungsgemäße Verfahren weist gegenüber den bisher üblichen Kühlverfahren beträchtliche Vorzüge auf, denn durch die adiabatische Abkühlung ist es möglich, ganzjährig ohne zusätzliche separate Kältegeräte auszukommen, was zu beträchtlichen Einsparungen führt. Die Abkühlung des Brotes erfolgt durch das geschlossene Kühltunnelprinzip mit wechselseitiger Zulufteinbringung in den jeweiligen Brotebenen völlig gleichmäßig und führt nicht zu einer unerwünschten Austrocknung des behandelten Gutes, sondern die Ware bleibt im hohen Feuchtigkeitsbereich. Gleichzeitig erfolgt durch die Ultraschallbefeuchtungsgeräte eine wirksame Vernichtung von Mikroben jeder Art im Kühlwasser, so daß dieser an sich bekannte Ultraschalleffekt zu einer praktischen Keimfreiheit des zur Befeuchtung eingesetzten Wassers führt und damit die hygienischen Bedingungen auch für die Weiterbearbeitung verbessert werden.

Das beispielhaft für die Herstellung von Schnittbrot beschriebene Verfahren kann, wie für den Fachmann ohne weiteres ersichtlich, auch auf eine Vielzahl anderer Prozesse bei der industriellen Herstellung von Lebensmitteln angewendet werden, bei denen erhitztes Gut rasch und gleichmäßig abgekühlt und dann weiterverarbeitet bzw. verpackt werden muß. So läßt sich dieses Verfahren mit nur geringfügigen Änderungen auch auf die Herstellung von geschnittenen oder in anderer Weise proportionierten Fleischwaren wie beispielsweise Brühwürste, Leberkäse oder ähnliches verwenden, aber auch bei der Bearbeitung von Milchprodukten wie Joghurt oder Käse oder bei der Herstellung anderer Backwaren wie Kuchen oder Gebäck oder auch bei der Verpackung von in Portionspackungen abgefüllten Snack-Artikeln. Die Temperaturen, die bei der freien Konvektion und im Kühltunnel 3 eingehalten werden, können variiert werden je nach Produktbedingungen, da beispielsweise die Schneidetemperaturen für Mischbrot oder Fleischkäse unterschiedlich sind und daher auch nur eine Abkühlung bis zur jeweiligen Schneidetemperatur erfolgen muß. Außerdem hängen die Temperaturen auch von den Arbeitsbedingungen in den Kühl- bzw. Schneide- oder Packräumen ab, da zu hohe Temperaturen, die durch Konvektion und Abstrahlung entstehen könnten, negative Auswirkungen auf die Leistungsfähigkeit des Betriebspersonals haben. Es ist dem Fachmann aber aufgrund seiner Kenntnisse ohne weiteres möglich, die Temperaturen in den Verfahrensabläufen so zu gestalten, daß sowohl Produkt- als auch Arbeitsbedingungen in entsprechender Weise berücksichtigt werden.

## Patentansprüche

1. Verfahren zum Abkühlen und anschliessenden Konfektionieren von Lebensmitteln, dadurch gekennzeichnet, daß das mindestens 100°C aufweisende Lebensmittel in einem Kühlraum (2) auf Temperaturen zwischen etwa 98 bis 90°C durch freie Konvektion und dann in einem in Abschnitte unterteilten Kühltunnel (3) adiabatisch auf Schnitt- oder Fülltemperatur des Lebensmittels abgekühlt und befeuchtet und dann in an sich bekannter Weise portioniert, verpackt und konfektioniert wird.

2. Verfahren nach Anspruch 1 zum Herstellen von Schnittbrot, dadurch gekennzeichnet, daß das in Stangen gebackene Brot am Ofenauslauf in einem Kühlraum (2) durch freie Konvektion auf 95°C und dann in einem in Abschnitte unterteilten Kühltunnel (3) adiabatisch weiter auf 35°C abgekühlt und befeuchtet und dann in an sich bekannter Weise geschnitten, verpackt und konfektioniert wird.

3. Verfahren nach Anspruch 1 oder 2, dadurch gekennzeichnet, daß der Kühltunnel (3) in drei Abschnitte unterteilt ist.

4. Verfahren nach Anspruch 1 bis 3, dadurch gekennzeichnet, daß die Kühlung im Kühltunnel (3) im Umluftkühlverfahren erfolgt, wobei die Abluft der jeweils nachfolgenden Kühlstufe nach adiabatischer Abkühlung als Zuluft der vorhergehenden Stufe eingesetzt und für die kühlste Stufe Luft aus dem Kühlraum (2) als Zuluft nach adiabatischer Abkühlung verwendet wird.

5. Verfahren nach Anspruch 1 bis 4, dadurch gekennzeichnet, daß die Temperatur der Luft im Kühlraum (2) vorzugsweise bei 28°C/65% r.F. gehalten wird.

6. Verfahren nach Anspruch 1 bis 5, dadurch gekennzeichnet, daß das Brot in drei Stufen (I, II, III) von 95°C auf 60°C, dann auf 45°C und abschliessend auf 35°C gekühlt wird.

7. Verfahren nach Anspruch 1 bis 6, dadurch gekennzeichnet, daß in allen Kühlstufen (I, II, III) die Zuluft bei der adiabatischen Abkühlung auf 90% r.F. eingestellt wird.

8. Verfahren nach Anspruch 1 bis 7, dadurch gekennzeichnet, daß die Abkühlung und Befeuchtung der Luft in den Kühlstufen (I, II, III) mit Hilfe von Ultraschallklimageräten durchgeführt wird.

9. Verfahren nach Anspruch 1 bis 7, dadurch gekennzeichnet, daß die Kühlung in den Kühlstufen (I, II, III) dadurch erfolgt, daß Reinstwasser in feinste Wassertröpfchen eines Durchmessers unter 30µm zerstäubt wird.

10. Verfahren nach Anspruch 1 bis 7 und Anspruch 9, dadurch gekennzeichnet, daß das Reinstwasser in Wassertröpfchen vom Durchmesser zwischen 5 und 20 µm zerstäubt wird.

11. Verfahren nach Anspruch 1 bis 8, dadurch gekennzeichnet, daß im Kühltunnel (3) die abgekühlte befeuchtete Luft über längsseitige, waagerechte Luftdurchlässe eingebracht wird, deren Abstand dem Abstand der Borde der Transportwagen entspricht.

12. Verfahren nach Anspruch 1 bis 9, dadurch gekennzeichnet, daß die Luftdurchlässe als Schlitze ausgebildet sind.

13. Verfahren nach Anspruch 1 bis 10, dadurch gekennzeichnet, daß in den einzelnen Kühlstufen (I, II, III) die Zuluftzufuhr wechselnd von rechts oder links erfolgt.

14. Verfahren nach Anspruch 1 bis 11, dadurch gekennzeichnet, daß die Luftgeschwindigkeit in allen Kühlstufen (I, II, III) über den Borden etwa 0,3 m/s beträgt.

15. Verfahren nach Anspruch 1 bis 12, dadurch gekennzeichnet, daß das gesamte Verfahren in an sich bekannter Weise unter Reinraumbedingungen durchgeführt wird.

## Claims

1. A method for cooling and subsequent treatment of food, characterized in that food having a temperature of at least 100°C is cooled down and humidified in a cooling room (2) to temperatures between approx. 98 to 90 °C by free convection and subsequently adiabatically in a cooling tunnel (3), which is separated into sections, to a temperature which enables cutting and filling and that it is afterwards portioned, packed and labelled in a manner known *per se.*

2. A method in accordance with claim 1 for the production of sliced bread, characterized in that the bread baked in form of long loaves is cooled down at the oven mouth and humidified in a cooling room (2) to 95 °C by free convection and subsequently adiabatically in a cooling tunnel (3), which is separated into sections, to 35 °C and that it is afterwards sliced, packed and labelled in a manner known *per se*.

3. A method in accordance with claims 1 or 2, characterized in that the cooling tunnel (3) is separated into three sections.

4. A method in accordance with claims 1 to 3, characterized in that the cooling in the cooling tunnel (3) is effected in a cooling procedure with circulating air, so that the used air of the following cooling step is used as entering cooling air in the preceeding step and that for the coolest step the air of the cooling room (2) is used after each adiabatic cooling.

5. A method in accordance with claims 1 to 4, characterized in that the air-temperature in the cooling room (2) is preferably kept at 28 °C/65 % relative humidity.

6. A method in accordance with claims 1 to 5, characterized in that the bread is cooled down in three steps (I,II,III) from 95 °C to 60 °C, than 45 °C and finally 35 °C.

7. A method in accordance with claims 1 to 6, characterized in that in all cooling steps (I, II, III) the entering air of the adiabatical cooling is kept at 90 % relative humidity.

8. A method in accordance with claims 1 to 7, characterized in that cooling and humidifying of the air in the cooling steps (I, II, III) is effected with the aid of ultrasonic air conditioning equipment.

9. A method in accordance with claims 1 to 7, characterized in that cooling in the cooling steps (I, II, III) is accomplished so that extremely pure water is dispersed into tiniest drops of water having a diameter of less than 30 µm.

10. A method in accordance with claims 1 to 7 and claim 9, characterized in that the water is dispersed in drops having a diameter between 5 and 20 µm.

11. A method in accordance with claims 1 to 8, characterized in that the air cooled down and humidified is transferred into the cooling tunnel (3) through longitudinal, horizontal air inlets, whose distance is equivalent to the distance of the shelves of the transport vehicles.

12. A method in accordance with claims 1 to 9, characterized in that the air inlets are formed as slots.

13. A method in accordance with claims 1 to 10, characterized in that the inlet of air in the separated cooling steps (I, II, III) is effected alternating from right or left.

14. A method in accordance with claims 1 to 11, characterized in that the velocity of the air above the shelves is about 0.3 m/s in all cooling steps.

15. A method in accordance with claims 1 to 12, characterized in that the whole method is applied in a manner known *per se* under extreme clean-room conditions.

## Revendications

1. Procédé pour le refroidissement et la confection suivante des aliments, caractérisé en ce que l'aliment ayant une température au moins de 100 °C est refroidi et humidifié par la convection libre dans une chambre de refroidissement (2) à une température entre a peu près de 98 à 90 °C et ensuite adiabatiquement dans un tunnel de refroidissement (3), qui est subdivisé à des sections, à une température propre à couper et emballer l'aliment et est ensuite partagé à des portions, emballé et confectioné par une manière connue.

2. Procédé selon la revendication 1 pour la fabrication du pain coupé, caractérisé en ce que le pain, qui est cuit comme une miche longue, à la bouche de four est refroidi et humidifié par la convection libre dans une chambre de refroidissement (2) à 95 °C et ensuite adiabatiquement dans un tunnel de refroidissement (3), qui est subdivisé à des sections, à 35 °C et est ensuite coupé, emballé et confectioné par une manière connue.

3. Procédé selon l'une de quelconque des revendications 1 ou 2, caractérisé en ce que le tunnel de refroidissement (3) est subdivisé à trois sections.

4. Procédé selon l'une de quelconque des revendications 1 à 3, caractérisé en ce que le refroidissement dans le tunnel de refroidissement (3) est effectué par une procédé de refroidissement avec de l'air circulé, en ce que l'air sortant d' une gradation de refroidissement suivante est appliqué comme l'air amené à gradation précédante après le refroidissement adiabatique et pour la gradation plus froide l'air de la chambre de refroidissement (2) est appliquè comme l'air amené après le refroidissement adiabatique.

5. Procédé selon l'une de quelconque des revendications 1 à 4, caractérisé en ce que la température dans la chambre de refroidissement est maintenue de préférence à 28 °C /65 % humidité relative.

6. Procédé selon l'une de quelconque des revendications 1 à 5, caractérisé en ce que le pain est refroidi en trois gradations (I, II, II) de 95 °C à 60 °C, ensuite à 45 °C et finalement à 35 °C.

7. Procédé selon l'une de quelconque des revendications 1 à 6, caractérisé en ce que dans toutes les gradations de refroidissement (I, II, III) l'air sortant pendant le refroidissement adiabatique est maintenu à 90 % humidité relative.

8. Procédé selon l'une de quelconque des revendications 1 à 7, caractérisé en ce que le refroidissement et la humectation de l'air dans les gradations de refroidissement (I, II, III) sont effectués avec des climatiseurs ultra-soniques.

9. Procédé selon l'une de quelconque des revendications 1 à 7, caractérisé en ce que le refroidissement dans les gradations de refroidissement (I, II, II) est effectué avec de l'eau extrêmement pure qu'est dispersée en gouttes d'eau très fines avec un diamètre moins de 30 µm.

10. Procédé selon l'une de quelconque des revendications 1 à 7 et revendication 9, caractérisé en ce que l'eau est dispersée en gouttes d'eau avec un diamètre entre 5 et 20 µm.

11. Procédé selon l'une de quelconque des revendications 1 à 8, caractérisé en ce que dans le tunnel de refroidissement (3) l'air refroidi et humidifié est appliqué par des entrées d'air longitudinales et horizontales, dont les écarts sont équidistants aux distances entre les étagères des vehicules de transport.

12. Procédé selon l'une de quelconque des revendications 1 à 9, caractérisé en ce que les entrées d'air sont des fentes.

13. Procédé selon l'une de quelconque des revendications 1 à 10, caractérisé en ce que dans les gradations de refroidissement séparées (I, II, III) l'alimentation d' air est effectuée variablement de droite ou de gauche.

14. Procédé selon l'une de quelconque des revendications 1 à 11, caractérisé en ce que la vitesse de l'air au-dessus des étagères est a peu près de 0.3 m/s dans toutes les trois gradations de refroidissement (I II, III).

15. Procédé selon l'une de quelconque des revendications 1 à 12, caractérisé en ce que toute la procédé est effectuée par une manière connue sous la condition d' un espace extrêmement pur.
